# EUROPEAN PATENT APPLICATION

(11) **EP 4 625 181 A1**
(43) Date of publication of application: **01.10.2025**
(21) Application number: 25156896.0
(22) Date of filing: 10.02.2025
(51) Int. Cl.: G06F 12/02

(54) **SYSTEM, METHOD AND APPARATUS FOR HYBRID MODE MEMORY HAVING FINE-GRAINED INTERLEAVING OF DISPARATE ADDRESS RANGES**

(30) Priority: 28.03.2024 US 202418619433
(71) Applicant: INTEL Corporation, Santa Clara, CA 95054 (US)
(72) Inventor: Agarwal, Ishwar, El Dorado Hills CA, 95762 (US)
(74) Representative: Samson & Partner Patentanwälte mbB

(57) **Abstract**

In one embodiment, a processor includes: at least one core to execute instructions; memory to store an address map having a hybrid region to identify a flat two level memory address range formed of first near memory address ranges interleaved on a sub-page basis with far memory address ranges, the first near memory ranges located in a near memory to couple to the processor via a first link and the far memory address ranges located in a far memory to couple to the processor via a second link; and an address decoder coupled to the memory, the address decoder to receive a memory request for an address from the at least one core and decode the address based at least in part on the address map. Other embodiments are described and claimed.

## Description

### BACKGROUND

In the interest of ever increasing speed and capacity of computer systems, some computer architectures form a system memory of multiple memories of potentially different types. Some systems include mixes of volatile and non-volatile memories, and others include mixes of volatile memories of different types. Particularly in cloud server implementations, these different memories can be referred to as a near or first level memory and a far or second level memory. In some cases, some portion of the near memory and the far memory is organized into a flat second level memory (F2LM), and the remainder of the near memory is organized into the first level memory (1 LM).

As a result, system configurations can have a mix of 1 LM and F2LM regions (referred to as a mixed mode). In a mixed-mode system, there is a contiguous range of 1LM memory, followed by a contiguous range of F2LM memory. These different ranges are advertised to an operating system (OS) as having differentiated capabilities (as two so-called different non-uniform memory access (NUMA) ranges). This arrangement leads to a situation where the OS manages these different NUMA ranges and makes policy choices on how to allocate memory to applications. This management is not a trivial issue since the OS typically does not know the sensitivity of application performance to memory latency. Such arrangement can lead to complexities for the OS to determine appropriate memory allocation, and can lead to applications incurring variable performance.

### BRIEF DESCRIPTION OF THE DRAWINGS

FIG. 1 is a block diagram of a memory architecture in accordance with an embodiment.
FIG. 2 is a flow diagram of a method in accordance with one embodiment.
FIG. 3 is a flow diagram of a method in accordance with another embodiment.
FIG. 4 is a block diagram of a system in accordance with an embodiment.
FIG. 5 illustrates an example computing system.
FIG. 6 illustrates a block diagram of an example processor in accordance with an embodiment.
FIG. 7 is a block diagram of a processor core in accordance with an embodiment.

### DETAILED DESCRIPTION

In various embodiments, a system is provided having a system memory formed of near and far memories. With this arrangement, the near memory, which may be implemented using a first memory type, can be coupled to a system on chip (SoC) or other processor via a memory bus. In turn, the far memory, which may be implemented using a second memory type, can be coupled to the SoC or other processor via another bus. As such, the near memory may be accessible at faster speeds, e.g., due to bus speeds, memory technology and/or other factors. And in turn, the far memory may be accessible at slower speeds, e.g., due to a bus speeds, memory technology and/or other factors.

In some embodiments, the near memory may have more capacity than the far memory. For example, in one embodiment, the near memory may be a 1 Terabyte (TB) memory and the far memory may be a 500 Gigabyte (GB) memory. In general, the near memory may be configured to be a cache memory for the far memory. In some embodiments, this memory architecture with near and far memory can be implemented in an exclusive manner, such that any given data element is located in only one of the near memory and the far memory.

In one or more embodiments this system memory implemented with both near and far memory can be configured to operate in a hybrid mode. In this hybrid mode, at least portions of both the near and far memory can be interleaved in a fine-grained manner as a hybrid region. As a result, a memory architecture in accordance with an embodiment can be presented to an operating system (OS), hypervisor such as a virtual machine monitor (VMM), or other system software, as a single undifferentiated non-uniform memory access (NUMA) domain. In this way, details of the actual location of the different memory regions are managed by processor hardware in a manner that is transparent to the system software. In addition, this undifferentiated memory arrangement enables uniform memory performance. Some embodiments also may provide for a separate 1LM region in addition to the hybrid region, where this separate 1LM region may be exposed as another NUMA region.

Although embodiments are not limited in this regard, in a particular system architecture the near memory may be implemented as double data rate (DDR5), dynamic random access memory (DRAM) that couples to a SoC or other processor via a memory bus, e.g., a DDR5 bus having 12-16 native channels. In turn, the far memory may be also implemented as DRAM, e.g., DDR5 memory or more likely an older DDR technology such as DDR4 memory. In actual implementations in a cloud-based architecture of a cloud service provider (CSP), this far memory may be reused memory devices taken from older decommissioned servers. In one or more embodiments, the far memory may couple to the SoC or other processor via a Compute Express Link (CXL) bus or other multi-protocol bus. In an embodiment communication with the far memory may occur using a CXL.mem protocol.

From a host OS perspective, in a memory arrangement as described herein each memory page is formed of a portion of near memory and far memory, in a transparent manner. As such, regardless of actual memory location, all pages look similar to the OS (e.g., having the same performance characteristics). As a result, the OS can distribute addresses to applications in a performance-agnostic manner. That is, from the OS perspective, regardless of actual location of the memory, equal performance may be assumed. Also from a guest software perspective, all memory performs uniformly.

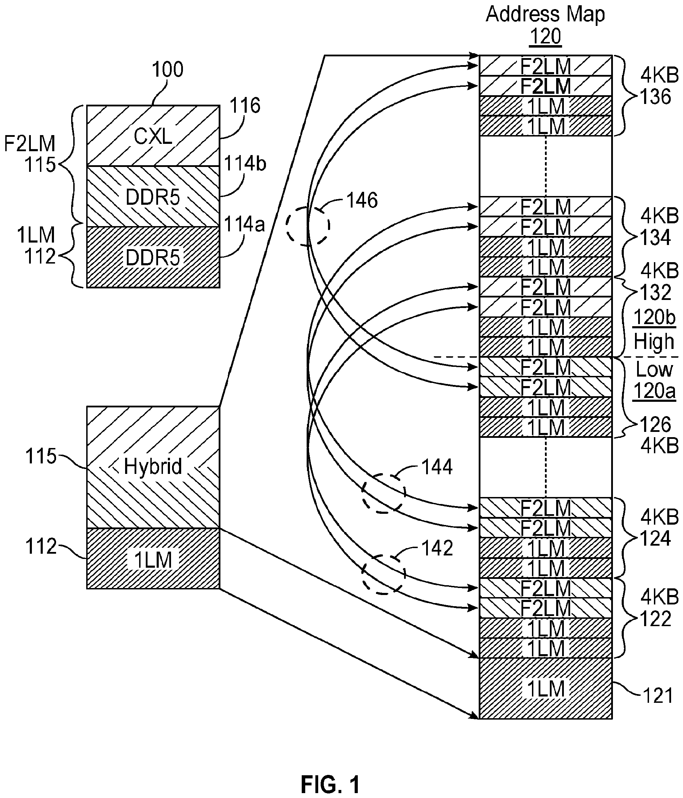

Referring now to FIG. 1, shown is a block diagram of a memory architecture in accordance with an embodiment. As shown in FIG. 1, a system memory 100 is formed of constituent components, namely, a near memory 114a,b and a far memory 116. System memory 100 may be configured to operate, at least in part, in a hybrid mode.

As discussed above in one or more embodiments, near memory 114 may be implemented with DDR5 DRAM, e.g., one or more dual inline memory modules (DIMMs) coupled to an SoC via a DDR5 bus. In turn, a far memory 116 may be implemented with CXL memory, namely one or more memory modules (e.g., DDR4 DIMMs) coupled to an SoC via a CXL interconnect.

A first portion of near memory (portion 114a) acts as a first level memory (1LM) 112. A second portion of near memory (portion 114b) is combined with far memory 116 to form a flat 2 level memory (F2LM) 115. Thus system memory 100 includes 1LM portion 112 and a hybrid portion 115 that is implemented as F2LM having both near and far memory components. These separate portions may be organized and exposed as 2 separate NUMA nodes, e.g., a NUMA0 node (formed of 1LM portion 112) and a NUMA1 node (formed of hybrid portion 115).

In one example implementation, near memory 114 may be implemented as a 1 TB memory and far memory 116 may be implemented as a 500 GB memory. In this example, near memory 114 is thus twice as large as far memory 116. In general, the high capacity of this memory architecture may be realized in part by an exclusive memory hierarchy. That is, information is stored in only one of near memory 114 or far memory 116 at any given time.

As further shown in FIG. 1, an address map 120 is illustrated. In an embodiment, address map 120 is a system address map, which may be implemented as a coherent writeback space system physical address map. As shown, address map 120 includes a first region 121 for 1LM 112. Region 121 is thus a contiguously mapped address range of near memory. A remainder of address map 120 is split into low and high portions 120a,b. As shown, each portion includes sub-page interleaving of 1LM and F2LM ranges.

More specifically, as shown in low portion 120a, each of first, second and third pages 122, 124 and 126 have first sub-page portions that map to a 1LM range (which is guaranteed to hit in near memory 114a) and second sub-page portions that map to a F2LM range (which may be present in near memory 114b or far memory 116). In embodiments, processor hardware can be used to interleave 1LM and F2LM address ranges at these sub-page granularities.

In the particular illustration of FIG. 1, each page granularity (e.g., 4 kilobyte (KB) page) is implemented with the first portion of the page (e.g., lower 2KB region) that maps to a 1LM range and the second portion of the page (e.g., upper 2KB region) that maps to a F2LM range. Such mapping may be appropriate where memory utilization within a page is biased towards the front end. Other allocations are possible in other implementations.

That is, while shown with this particular mapping in FIG. 1, understand that other mappings may be possible. For example, granularities other than on a KB basis may be used. In addition, smaller granularities are possible, e.g., on a cache line (e.g., 64 byte(B)) basis. In yet other cases, multiple cache lines, e.g., interleaving by a number of cache lines (e.g., two or four) may occur. Furthermore, there may be different ratios between near and far memory.

Still referring to FIG. 1, note the symmetry between pages in low portion 120a and high portion 120b, which includes pages 132, 134 and 136. Specifically, each of these pages also includes a first portion that maps to a 1LM range and a second portion that maps to a F2LM range.

With this arrangement, higher portion 120b of the hybrid address range includes a conflict pair for every 64B cache line in lower portion 120a of the hybrid address range for the various F2LM regions. As such, arrows 142, 144 and 146 illustrate the presence of conflict pairs between the low and high address ranges. To this end, an address mapping to an F2LM range may occur by looking at a given page region and finding a conflict pair by subtracting a base address of the F2LM range and then adding half the size of the range to it. As will be described herein, swap operations may be performed to cause data stored in far memory to be brought into near memory to respond to a memory request. Although shown at this high level in the embodiment of FIG. 1, many variations and alternatives are possible.

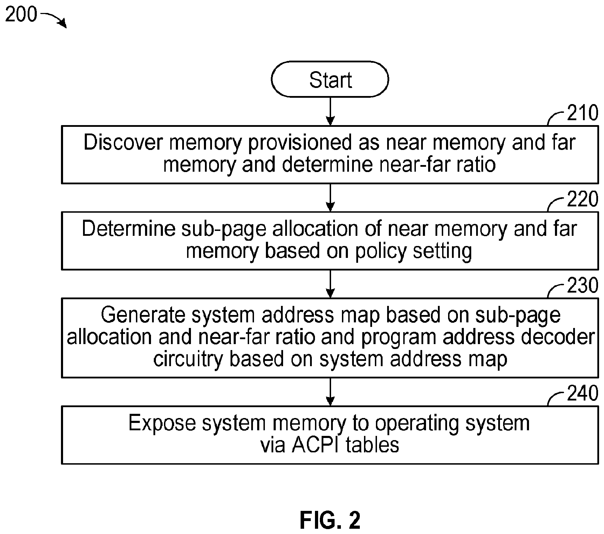

Referring now to FIG. 2, shown is a flow diagram of a method in accordance with an embodiment. More specifically, method 200 is a method for provisioning a hybrid mode for a system memory having near and far memory as described herein. As such, method 200 may be performed by hardware circuitry of a system such as various SoC hardware, which may execute instructions, e.g., implemented as part of a firmware (e.g., basic input/output system (BIOS)) alone and/or in combination with other firmware and/or software.

As illustrated, method 200 begins by discovering memory provisioned in a system as having near and far memory (block 210). In an embodiment, this discovery process may be performed on initialization of a system such as a cloud server system of a datacenter or other cloud service provider that includes near memory, e.g., implemented as DDR5 DIMMs, and far memory, e.g., implemented as CXL-coupled memory. In an embodiment, this discovery process may be performed by execution of BIOS instructions. In addition at block 210, a near-far ratio may be determined based on this discovery process. In an embodiment, the near-far ratio can be determined based on the capacity of near and far memory. With the above example of near memory with 1TB capacity and far memory with 0.5TB capacity, this near-far ratio is 2:1.

Still referring to FIG. 2, next at block 220, a sub-page allocation of near and far memory may be determined based on a policy setting. Although embodiments are not limited in this regard, in one or more example implementations, a firmware setting may be provided for this policy setting. As a simple example, there may be three configurability options for 1LM:F2LM ratios within a page. These ratios may be a 2:2 ratio; a 1:3 ratio and a 3:1 ratio. In these example ratios and assuming a page size of 4KB, the 2:2 ratio corresponds to 2KB of 1LM memory and 2KB of F2LM memory. In an embodiment, this policy setting may be based on a system administrator choice. As discussed above, assuming a 2:2 ratio, the sub-page allocation similarly may correspond to 2KB of near memory and 2KB of far memory. In a particular implementation, the lower half of each page maps to 1LM and the upper half maps to F2LM.

Next, at block 230, a system address map may be generated based on this sub-page allocation and the near-far ratio. In an embodiment, the system address map may be generated to indicate the regions of each page that are allocated to near memory and far memory and may, in one example, be generated as shown at system address map 120 in FIG. 1. In addition at block 230, address decoder circuitry may be programmed based on the system address map. Note that various address decoder circuitry may be present in a particular implementation, including source address decoder and target address decoder circuitry.

Still with reference to FIG. 2, control passes to block 240 where the system memory may be exposed to an OS or other system software such as a hypervisor. In an embodiment, the system memory may be exposed via entries in Advanced Configuration and Power Interface (ACPI) tables, including a static resource affinity table (SRAT) and system locality information table (SLIT). Note that these tables may indicate that the system memory is a single undifferentiated NUMA region. As such, the OS need not consider performance differences when allocating memory to applications such as virtual machines (VMs), easing complexity and burden on the OS. Although shown at this high level in the embodiment of FIG. 2, many variations and alternatives are possible.

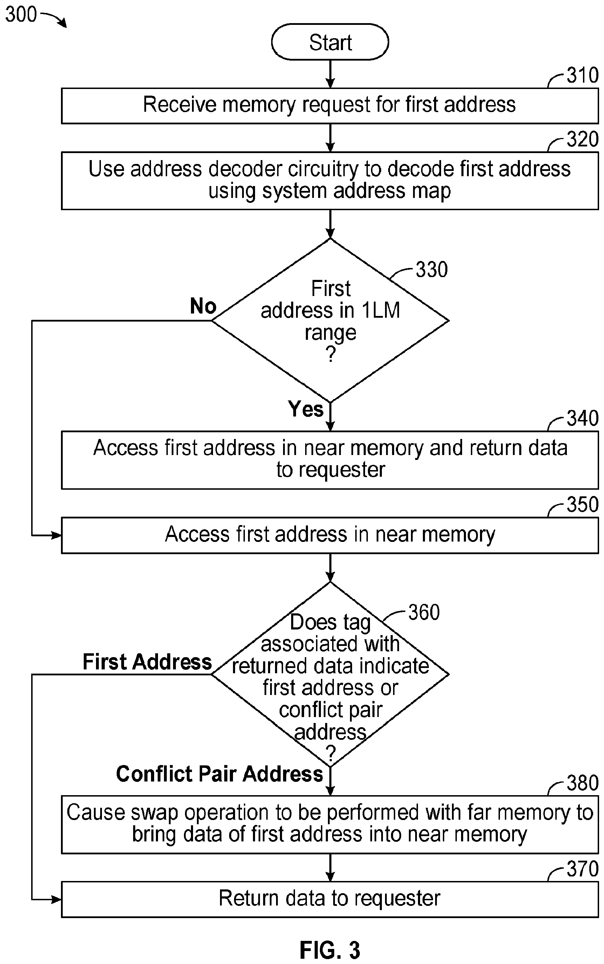

Referring now to FIG. 3, shown is a flow diagram of a method in accordance with another embodiment. As shown in FIG. 3, method 300 is a method for accessing a hybrid memory. In one or more embodiments, method 300 may be performed by hardware circuitry including various processor circuitry that receives and processes memory requests, which may include address decoder circuitry and associated system address map, and memory controller circuitry, which may interact with memory itself.

As shown, method 300 begins by receiving a memory request for a first address (block 310). Assume that this memory request is a read request received from a requester, e.g., a core, to read data present at this first address. Understand that the read request is received with the first address as a physical address. This physical address may be obtained via a virtual address-to-physical address translation (which may be performed in a translation lookaside buffer (TLB) or other memory management unit (MMU) hardware).

Next at block 320, address decoder circuitry may be used to decode the first address using the system address map. Based on this decoding, it may be determined at diamond 330 whether the first address is present in a 1LM range, e.g., as determined based on reference to the system address map. More specifically this determination is performed to identify whether the first address is in a contiguous 1LM portion (e.g., a low order portion of a near memory, 1LM 112 of FIG. 1). If so, control passes to block 340 where the first address is accessed in the near memory and data at that address may be obtained and returned to the requester. To this end, a memory controller may issue the read request via the appropriate channel to the near memory, based on the decoded address.

Still referring to FIG. 3, instead if the first address is determined not to be in the dedicated 1LM range, control passes to block 350 where the first address may be accessed in the near memory. That is, in this instance, a given location in the near memory that is mapped to a low order portion of the hybrid range is accessed to obtain the information present at that memory location, e.g., including a tag portion and a data portion. The information at this memory location (tag and data portions) is returned to the memory controller.

Next at diamond 360, it is determined (e.g., by the memory controller that receives the returned data and metadata) whether the tag portion of the accessed information indicates whether the returned data is of the first address or is for a conflict pair address. In an embodiment, this tag portion may be a single bit to indicate whether the associated data is in the low or high portions of the hybrid portion. If the tag indicates that the returned data is for the first address, control passes to block 370 where the obtained data is returned to the requester.

Otherwise, control passes from diamond 360 to block 380 where the memory controller may cause a swap operation to be performed. Via this swap operation, the obtained data is sent to the far memory and data stored at the conflict pair address of the far memory is brought in and stored at the first address of the near memory. In addition, this obtained data from the far memory is returned to the requester at block 370. Although shown at this high level in the embodiment of FIG. 3, many variations and alternatives are possible.

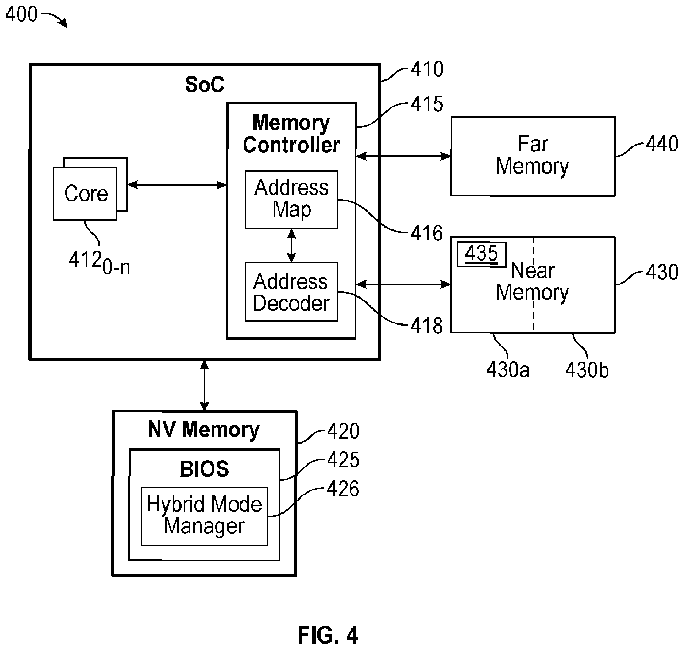

Referring now to FIG. 4, shown is a block diagram of a system in accordance with an embodiment. As shown in FIG. 4, system 400 may be any type of computing system. In typical implementations, system 400 may be a server of a cloud service provider. In the high level view shown in FIG. 4, only a limited number of components of the system are illustrated, so as not to obscure details related to the sub-page hybrid address range interleaving described herein.

As shown, system 400 includes an SoC 410. In the high level view shown in FIG. 4, SoC 410 includes a plurality of cores 412₀₋ₙ, which in different implementations may be homogeneous or heterogeneous cores. Cores 412 couple to a memory controller 415, which acts as an interface between SoC 410 and a system memory. In the embodiment of FIG. 4, this system memory is implemented with separate memories, including a near memory 430 and a far memory 440. As described herein, near memory 430 may be implemented with DDR5, and may couple to SoC 412 via a memory interconnect, e.g., a DDR5 interconnect having a plurality of channels. In turn, far memory 440 may be implemented with a different memory technology, e.g., DDR4 memory, and may couple to SoC 410 via a different interconnect, such as a CXL interconnect.

Still with reference to FIG. 4, memory controller 415 includes an address map 416 (which may be stored in a cache memory or other storage) and an address decoder 418. Although shown as being included in memory controller 415, understand that these components may be located elsewhere within SoC 410 in other embodiments.

In an embodiment, a firmware, namely a BIOS 425, is stored in a non-volatile memory 420, and may generate address map 416 based on discovery of the memory architecture of system 400, namely the presence of near memory 430 and far memory 440 (and the capacities of these two memories). To this end, BIOS 425 may include a hybrid mode manager 426. When hybrid mode is enabled, e.g., based on user configuration in BIOS 425 via a hybrid mode setting (note that the setting may also provide for user-controlled near-far ratios). In the hybrid mode, hybrid mode manager 426 generates address map 416 having a sub-page interleaving of memory segments of near memory 430 and far memory 440. Still further, again depending upon configuration, hybrid model manager 426 may also provide for a 1LM address range within address map 416. Thus as shown, assuming such division of address map 416 into a 1LM region and a F2LM region, near memory 430 can be partitioned into a 1LM region 430a and a F2LM region 430b. Note that far memory 440 may be wholly implemented as a F2LM region (combined in address map 416 with F2LM region 430b).

In this and or other embodiments, BIOS 425, after generating address map 416 and programming address decoder 418 using address map 416, may expose the memory architecture to system software such as a VMM, OS or other such software as having a single undifferentiated NUMA architecture. Of course in other implementations the memory architecture can be exposed with separate NUMA regions, e.g., NUMA0 and NUMA1 regions. Although shown at this high level in the embodiment of FIG. 4, many variations and alternatives are possible.

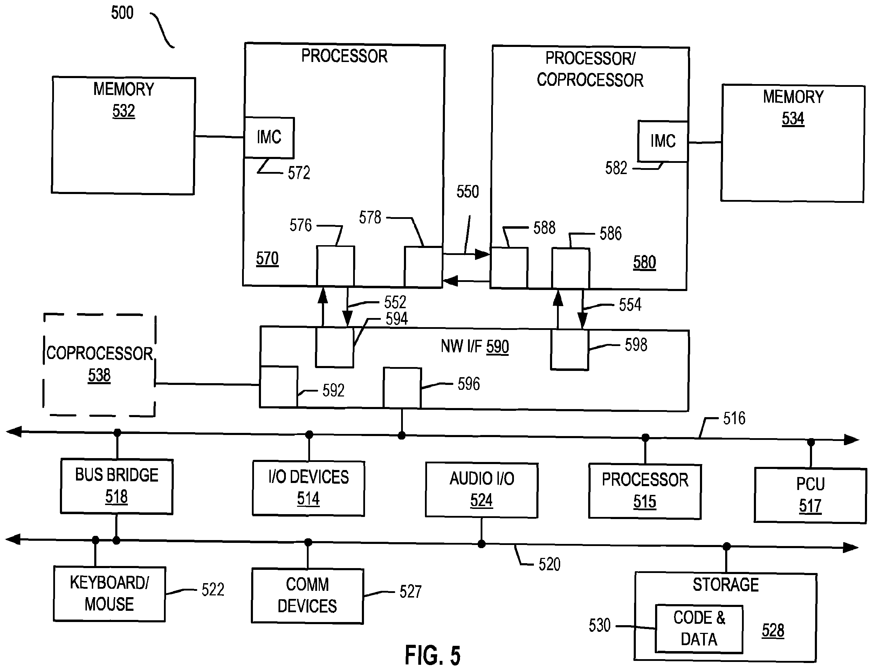

FIG. 5 illustrates an example computing system. Multiprocessor system 500 is an interfaced system and includes a plurality of processors or cores including a first processor 570 and a second processor 580 coupled via an interface 550 such as a point-to-point (P-P) interconnect, a fabric, and/or bus. In some examples, the first processor 570 and the second processor 580 are homogeneous. In some examples, first processor 570 and the second processor 580 are heterogenous. Though the example system 500 is shown to have two processors, the system may have three or more processors, or may be a single processor system. In some examples, the computing system is a SoC.

Processors 570 and 580 are shown including integrated memory controller (IMC) circuitry 572 and 582, respectively, which may configure address decoders using a system address map for a hybrid mode as described herein (and further perform swaps when requested data is present in a far memory). Processor 570 also includes interface circuits 576 and 578; similarly, second processor 580 includes interface circuits 586 and 588. Processors 570, 580 may exchange information via the interface 550 using interface circuits 578, 588. IMCs 572 and 582 couple the processors 570, 580 to respective memories, namely a memory 532 and a memory 534, which may be portions of main memory locally attached to the respective processors (and which may include combinations of near and far memories, which may be implemented with different memory types and communication protocols as described herein).

Processors 570, 580 may each exchange information with a network interface (NW I/F) 590 via individual interfaces 552, 554 using interface circuits 576, 594, 586, 598. The network interface 590 (e.g., one or more of an interconnect, bus, and/or fabric, and in some examples is a chipset) may optionally exchange information with a coprocessor 538 via an interface circuit 592. In some examples, the coprocessor 538 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 570, 580 or outside of both processors, yet connected with the processors via an interface such as P-P interconnect, such that either or both processors' local cache information may be stored in the shared cache if a processor is placed into a low power mode.

Network interface 590 may be coupled to a first interface 516 via interface circuit 596. In some examples, first interface 516 may be an interface such as a Peripheral Component Interconnect (PCI) interconnect, a PCI Express interconnect or another I/O interconnect. In some examples, first interface 516 is coupled to a power control unit (PCU) 517, which may include circuitry, software, and/or firmware to perform power management operations with regard to the processors 570, 580 and/or co-processor 538. PCU 517 provides control information to a voltage regulator (not shown) to cause the voltage regulator to generate the appropriate regulated voltage. PCU 517 also provides control information to control the operating voltage generated. In various examples, PCU 517 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 517 is illustrated as being present as logic separate from the processor 570 and/or processor 580. In other cases, PCU 517 may execute on a given one or more of cores (not shown) of processor 570 or 580. In some cases, PCU 517 may be implemented as a microcontroller (dedicated or general-purpose) or other control logic configured to execute its own dedicated power management code, sometimes referred to as P-code. In yet other examples, power management operations to be performed by PCU 517 may be implemented externally to a processor, such as by way of a separate power management integrated circuit (PMIC) or another component external to the processor. In yet other examples, power management operations to be performed by PCU 517 may be implemented within BIOS or other system software.

Various I/O devices 514 may be coupled to first interface 516, along with a bus bridge 518 which couples first interface 516 to a second interface 520. In some examples, one or more additional processor(s) 515, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 516. In some examples, second interface 520 may be a low pin count (LPC) interface. Various devices may be coupled to second interface 520 including, for example, a keyboard and/or mouse 522, communication devices 527 and storage circuitry 528. Storage circuitry 528 may be one or more non-transitory machine-readable storage media as described below, such as a disk drive or other mass storage device which may include instructions/code and data 530. Further, an audio I/O 524 may be coupled to second interface 520. Note that other architectures than the point-to-point architecture described above are possible. For example, instead of the point-to-point architecture, a system such as multiprocessor system 500 may implement a multi-drop interface or other such architecture.

Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

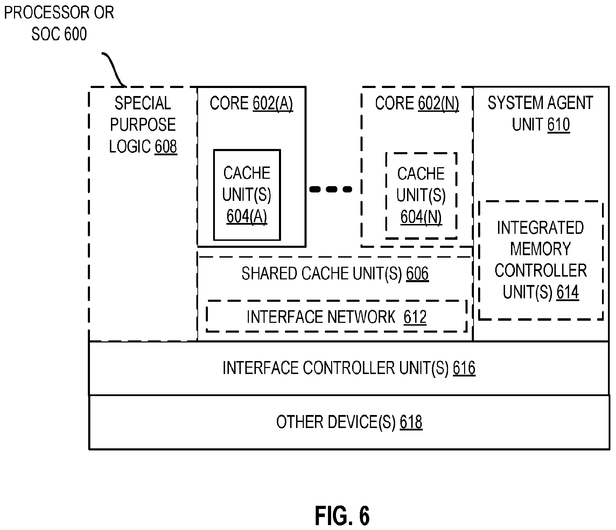

FIG. 6 illustrates a block diagram of an example processor and/or SoC 600 that may have one or more cores and an integrated memory controller. The solid lined boxes illustrate a processor 600 with a single core 602(A), system agent unit circuitry 610, and a set of one or more interface controller unit(s) circuitry 616, while the optional addition of the dashed lined boxes illustrates an alternative processor 600 with multiple cores 602(A)-(N), a set of one or more integrated memory controller unit(s) circuitry 614 (which may program address decoders using an address map as described herein) in the system agent unit circuitry 610, and special purpose logic 608, as well as a set of one or more interface controller units circuitry 616. Note that the processor 600 may be one of the processors 570 or 580, or co-processor 538 or 515 of FIG. 5.

Thus, different implementations of the processor 600 may include: 1) a CPU with the special purpose logic 608 being integrated graphics and/or scientific (throughput) logic (which may include one or more cores, not shown), and the cores 602(A)-(N) being one or more general purpose cores (e.g., general purpose in-order cores, general purpose out-of-order cores, or a combination of the two); 2) a coprocessor with the cores 602(A)-(N) being a large number of special purpose cores intended primarily for graphics and/or scientific (throughput); and 3) a coprocessor with the cores 602(A)-(N) being a large number of general purpose in-order cores. Thus, the processor 600 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 600 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 604(A)-(N) within the cores 602(A)-(N), a set of one or more shared cache unit(s) circuitry 606, and external memory (not shown) coupled to the set of integrated memory controller unit(s) circuitry 614. The set of one or more shared cache unit(s) circuitry 606 may include one or more mid-level caches, such as level 2 (L2), level 3 (L3), level 4 (L4), or other levels of cache, such as a last level cache (LLC), and/or combinations thereof. While in some examples interface network circuitry 612 (e.g., a ring interconnect) interfaces the special purpose logic 608 (e.g., integrated graphics logic), the set of shared cache unit(s) circuitry 606, and the system agent unit circuitry 610, alternative examples use any number of well-known techniques for interfacing such units. In some examples, coherency is maintained between one or more of the shared cache unit(s) circuitry 606 and cores 602(A)-(N). In some examples, interface controller unit circuitry 616 couple the cores 602 to one or more other devices 618 such as one or more I/O devices, storage, one or more communication devices (e.g., wireless networking, wired networking, etc.), etc.

In some examples, one or more of the cores 602(A)-(N) are capable of multi-threading. The system agent unit circuitry 610 includes those components coordinating and operating cores 602(A)-(N). The system agent unit circuitry 610 may include, for example, power control unit (PCU) circuitry and/or display unit circuitry (not shown). The PCU may be or may include logic and components needed for regulating the power state of the cores 602(A)-(N) and/or the special purpose logic 608 (e.g., integrated graphics logic). The display unit circuitry is for driving one or more externally connected displays.

The cores 602(A)-(N) may be homogenous in terms of instruction set architecture (ISA). Alternatively, the cores 602(A)-(N) may be heterogeneous in terms of ISA; that is, a subset of the cores 602(A)-(N) may be capable of executing an ISA, while other cores may be capable of executing only a subset of that ISA or another ISA.

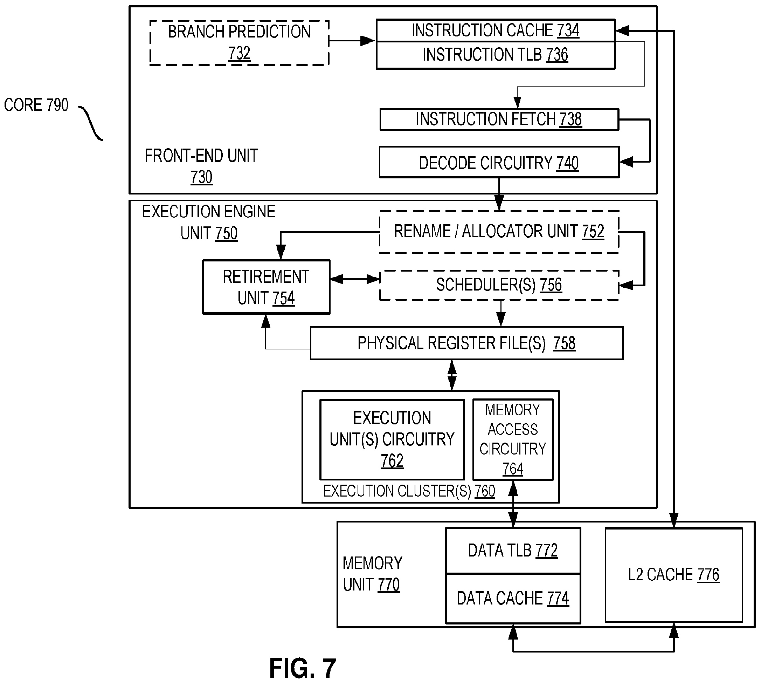

FIG. 7 shows a processor core 790 including front-end unit circuitry 730 coupled to execution engine unit circuitry 750, and both are coupled to memory unit circuitry 770. The core 790 may be a reduced instruction set architecture computing (RISC) core, a complex instruction set architecture computing (CISC) core, a very long instruction word (VLIW) core, or a hybrid or alternative core type. As yet another option, the core 790 may be a special-purpose core, such as, for example, a network or communication core, compression engine, coprocessor core, general purpose computing graphics processing unit (GPGPU) core, graphics core, or the like.

The front-end unit circuitry 730 may include branch prediction circuitry 732 coupled to instruction cache circuitry 734, which is coupled to an instruction translation lookaside buffer (TLB) 736, which is coupled to instruction fetch circuitry 738, which is coupled to decode circuitry 740. In one example, the instruction cache circuitry 734 is included in the memory unit circuitry 770 rather than the front-end circuitry 730. The decode circuitry 740 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 740 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 740 may be implemented using various different mechanisms. Examples of suitable mechanisms include, but are not limited to, look-up tables, hardware implementations, programmable logic arrays (PLAs), microcode read only memories (ROMs), etc. In one example, the core 790 includes a microcode ROM (not shown) or other medium that stores microcode for certain macroinstructions (e.g., in decode circuitry 740 or otherwise within the front-end circuitry 730). In one example, the decode circuitry 740 includes a micro-operation (micro-op) or operation cache (not shown) to hold/cache decoded operations, micro-tags, or micro-operations generated during the decode or other stages of the processor pipeline 700. The decode circuitry 740 may be coupled to rename/allocator unit circuitry 752 in the execution engine circuitry 750.

The execution engine circuitry 750 includes the rename/allocator unit circuitry 752 coupled to retirement unit circuitry 754 and a set of one or more scheduler(s) circuitry 756. The scheduler(s) circuitry 756 represents any number of different schedulers, including reservations stations, central instruction window, etc. In some examples, the scheduler(s) circuitry 756 can include arithmetic logic unit (ALU) scheduler/scheduling circuitry, ALU queues, address generation unit (AGU) scheduler/scheduling circuitry, AGU queues, etc.

The scheduler(s) circuitry 756 is coupled to the physical register file(s) circuitry 758. Each of the physical register file(s) circuitry 758 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 758 includes vector registers unit circuitry, writemask registers unit circuitry, and scalar register unit circuitry. These register units may provide architectural vector registers, vector mask registers, general-purpose registers, etc. The physical register file(s) circuitry 758 is coupled to the retirement unit circuitry 754 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 754 and the physical register file(s) circuitry 758 are coupled to the execution cluster(s) 760. The execution cluster(s) 760 includes a set of one or more execution unit(s) circuitry 762 and a set of one or more memory access circuitry 764. The execution unit(s) circuitry 762 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 756, physical register file(s) circuitry 758, and execution cluster(s) 760 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 764). It should also be understood that where separate pipelines are used, one or more of these pipelines may be out-of-order issue/execution and the rest in-order.

In some examples, the execution engine unit circuitry 750 may perform load store unit (LSU) address/data pipelining to an Advanced Microcontroller Bus (AMB) interface (not shown), and address phase and writeback, data phase load, store, and branches.

The set of memory access circuitry 764 is coupled to the memory unit circuitry 770, which includes data TLB circuitry 772 coupled to data cache circuitry 774 coupled to level 2 (L2) cache circuitry 776. In one example, the memory access circuitry 764 may include load unit circuitry, store address unit circuitry, and store data unit circuitry, each of which is coupled to the data TLB circuitry 772 in the memory unit circuitry 770. The memory access circuitry 764 may leverage embodiments to provide access to a hybrid mode memory formed of different memory types via a single exposed NUMA region, as described herein. The instruction cache circuitry 734 is further coupled to the level 2 (L2) cache circuitry 776 in the memory unit circuitry 770. In one example, the instruction cache 734 and the data cache 774 are combined into a single instruction and data cache (not shown) in L2 cache circuitry 776, level 3 (L3) cache circuitry (not shown), and/or main memory. The L2 cache circuitry 776 is coupled to one or more other levels of cache and eventually to a main memory.

The following examples pertain to further embodiments.

In one example, an apparatus includes: at least one core to execute instructions; first memory to store an address map, the address map having a hybrid region to identify a F2LM address range formed of first near memory address ranges interleaved on a sub-page basis with far memory address ranges, the first near memory address ranges located in a near memory to couple to the apparatus via a first link and the far memory address ranges located in a far memory to couple to the apparatus via a second link; and an address decoder coupled to the first memory, the address decoder to receive a memory request for an address from the at least one core and decode the address based at least in part on the address map.

In an example, the address map further comprises a first region to identify a 1LM address range, the 1LM address range located in the near memory, the 1LM address range comprising a contiguous address range.

In an example, a firmware is to discover the near memory and the far memory and determine a near-far ratio based at least in part on a size of the near memory and a size of the far memory.

In an example, the firmware, based on a policy setting, is to configure the address map having the hybrid region comprising a sub-page ratio of the first near memory address ranges and the far memory address ranges.

In an example, the firmware is to expose the hybrid region to an operating system as a single undifferentiated NUMA architecture.

In an example, the hybrid region comprises a first portion and a second portion, where a first set of addresses in the first near memory address ranges of the first portion are associated with a conflict set of addresses in the far memory address ranges of the second portion.

In an example, the apparatus further comprises a memory controller to cause a swap between data of a first address of the first set of addresses in the first near memory address ranges of the first portion and data of a conflict address of the conflict set of addresses in the far memory address ranges of the second portion.

In an example, the memory controller is to cause the swap based on a tag portion of information stored at the first address of the first set of addresses in the first near memory address ranges of the first portion.

In an example, the memory controller is to further send to the at least one core the data of the conflict address of the conflict address of the conflict set of addresses in the far memory address ranges of the second portion.

In an example: the near memory is to couple to the apparatus via the first link comprising a memory interconnect, the near memory of a first memory type; and the far memory is to couple to the apparatus via the second link comprising a Compute Express Link interconnect, the far memory of a second memory type.

In an example, the memory controller is to cause the near memory to store data exclusively with respect to the far memory, and cause the far memory to store data exclusively with respect to the near memory.

In another example, a method comprises: determining a ratio based at least in part on a first size of a first memory coupled to a processor and a second size of a second memory coupled to the processor; determining, based at least in part on a configuration setting, a sub-page allocation of the first memory and the second memory, the sub-page allocation to be applied to each of a plurality of first pages of the first memory and each of a plurality of pages of the second memory; generating, based on the ratio and the sub-page allocation, a system address map comprising a hybrid address range comprising the plurality of first pages of the first memory and the plurality of pages of the second memory; and programming address decoder circuitry according to the system address map.

In an example, the method further comprises exposing a hybrid address range as a single undifferentiated NUMA architecture to an operating system.

In an example, the method further comprises exposing the hybrid address range as the single undifferentiated NUMA architecture via one or more entries in at least one table.

In an example, generating the system address map comprises: a F2LM comprising the hybrid address range; and a 1LM comprising a contiguous address range of the first memory, the contiguous address range comprising a plurality of second pages of the first memory.

In an example, the method further comprises decoding, using the address decoder circuitry, a first address of a read request to determine whether the first address is located in the F2LM or the 1LM.

In an example, the method further comprises: in response to determining that the first address is located in the 1LM, sending the read request to the first memory, and receiving the return data from the first memory; and in response to determining that the first address is located in the F2LM, sending the read request to the first memory, wherein based on a tag associated with first data returned from the F2LM, causing a swap operation between the first data and second data present at a conflict address located in the F2LM in the second memory.

In another example, a computer readable medium including instructions is to perform the method of any of the above examples.

In a further example, a computer readable medium including data is to be used by at least one machine to fabricate at least one integrated circuit to perform the method of any one of the above examples.

In a still further example, an apparatus comprises means for performing the method of any one of the above examples.

In yet another example, a system comprises: a SoC, a first memory coupled to the SoC via a memory interconnect; and a second memory to the SoC via a second interconnect. The SoC may comprise: at least one core to execute instructions; a memory controller coupled to the at least one core, the memory controller comprising: first storage to store an address map, the address map having a hybrid region to identify a hybrid address range formed of a plurality of page of a first memory and a plurality of pages of a second memory, where the hybrid address range comprises: a first portion having a first plurality of pages, each of the first plurality of pages having interleaved first memory segments of the first memory and second memory segments of the second memory; and a second portion have a second plurality of pages, where the second plurality of pages are symmetrical with respect to the first plurality of pages; and an address decoder, the address decoder programmed according to the address map.

In an example, the system is to expose the first memory and the second memory to an operating system as a single undifferentiated non-uniform memory access architecture.

In an example, the memory controller is to: receive, in response to a read request for a first address, a return of data and metadata from the first memory; determine, in response to a tag of the metadata, that the data is for a conflict address associated with the first address, the conflict address located in the second memory; and cause a swap operation to cause the data to be sent to the conflict address located in the second memory and cause second data stored at the conflict address located in the second memory to be stored at the first address of the first memory.

Understand that various combinations of the above examples are possible.

Note that the terms "circuit" and "circuitry" are used interchangeably herein. As used herein, these terms and the term "logic" are used to refer to alone or in any combination, analog circuitry, digital circuitry, hard wired circuitry, programmable circuitry, processor circuitry, microcontroller circuitry, hardware logic circuitry, state machine circuitry and/or any other type of physical hardware component. Embodiments may be used in many different types of systems. For example, in one embodiment a communication device can be arranged to perform the various methods and techniques described herein. Of course, the scope of the present invention is not limited to a communication device, and instead other embodiments can be directed to other types of apparatus for processing instructions, or one or more machine readable media including instructions that in response to being executed on a computing device, cause the device to carry out one or more of the methods and techniques described herein.

Embodiments may be implemented in code and may be stored on a non-transitory storage medium having stored thereon instructions which can be used to program a system to perform the instructions. Embodiments also may be implemented in data and may be stored on a non-transitory storage medium, which if used by at least one machine, causes the at least one machine to fabricate at least one integrated circuit to perform one or more operations. Still further embodiments may be implemented in a computer readable storage medium including information that, when manufactured into a SOC or other processor, is to configure the SOC or other processor to perform one or more operations. The storage medium may include, but is not limited to, any type of disk including floppy disks, optical disks, solid state drives (SSDs), compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), magnetic or optical cards, or any other type of media suitable for storing electronic instructions.

While the present disclosure has been described with respect to a limited number of implementations, those skilled in the art, having the benefit of this disclosure, will appreciate numerous modifications and variations therefrom. It is intended that the appended claims cover all such modifications and variations.

## Claims

1. An apparatus comprising:
at least one core to execute instructions;
first memory to store an address map, the address map having a hybrid region to identify a flat two level memory (F2LM) address range formed of first near memory address ranges interleaved on a sub-page basis with far memory address ranges, the first near memory ranges located in a near memory to couple to the apparatus via a first link and the far memory address ranges located in a far memory to couple to the apparatus via a second link; and
an address decoder coupled to the first memory, the address decoder to receive a memory request for an address from the at least one core and decode the address based at least in part on the address map.

2. The apparatus of claim 1, wherein the address map further comprises a first region to identify a first level memory (1LM) address range, the 1LM address range located in the near memory, the 1LM address range comprising a contiguous address range.

3. The apparatus of claim 1, wherein a firmware is to discover the near memory and the far memory and determine a near-far ratio based at least in part on a size of the near memory and a size of the far memory.

4. The apparatus of claim 3, wherein the firmware, based on a policy setting, is to configure the address map having the hybrid region comprising a sub-page ratio of the first near memory address ranges and the far memory address ranges.

5. The apparatus of any one of claims 1-4, wherein the firmware is to expose the hybrid region to an operating system as a single undifferentiated non-uniform memory access (NUMA) architecture.

6. The apparatus of any one of claims 1-5, wherein the hybrid region comprises a first portion and a second portion, wherein a first set of addresses in the first near memory address ranges of the first portion are associated with a conflict set of addresses in the far memory address ranges of the second portion.

7. The apparatus of claim 6, further comprising a memory controller to cause a swap between data of a first address of the first set of addresses in the first near memory address ranges of the first portion and data of a conflict address of the conflict set of addresses in the far memory address ranges of the second portion.

8. The apparatus of claim any one of claims 1-7, wherein:
the near memory is to couple to the apparatus via the first link comprising a memory interconnect, the near memory of a first memory type; and
the far memory is to couple to the apparatus via the second link comprising a Compute Express Link interconnect, the far memory of a second memory type.

9. The apparatus of claim 8, wherein the memory controller is to cause the near memory to store data exclusively with respect to the far memory, and cause the far memory to store data exclusively with respect to the near memory.

10. A method comprising:
determining a ratio based at least in part on a first size of a first memory coupled to the processor and a second size of a second memory coupled to the processor;
determining, based at least in part on a configuration setting, a sub-page allocation of the first memory and the second memory, the sub-page allocation to be applied to each of a plurality of first pages of the first memory and each of a plurality of pages of the second memory;
generating, based on the ratio and the sub-page allocation, a system address map comprising a hybrid address range comprising the plurality of first pages of the first memory and the plurality of pages of the second memory; and
programming address decoder circuitry according to the system address map.

11. The method of claim 10 further comprising exposing a hybrid address range as a single undifferentiated non-uniform memory access (NUMA) architecture to an operating system.

12. The method of claim 11, wherein exposing the hybrid address range as the single undifferentiated NUMA architecture via one or more entries in at least one table.

13. The method of any one of claims 10-12, further comprising generating the system address map comprising:
a flat second level memory (F2LM) comprising the hybrid address range; and
a first level memory (1LM) comprising a contiguous address range of the first memory, the contiguous address range comprising a plurality of second pages of the first memory.

14. The method of claim 13, wherein the method further comprises decoding, using the address decoder circuitry, a first address of a read request to determine whether the first address is located in the F2LM or the 1LM.

15. At least one computer-readable medium comprising computer-readable instructions, which when executed by a processor, cause the processor to implement a method as claimed in any one of claims 10-14.
